# EUROPÄISCHE PATENTANMELDUNG

(11) **EP 3 012 527 A1**
(43) Veröffentlichungstag der Anmeldung: **27.04.2016**
(21) Anmeldenummer: 15189954.9
(22) Anmeldetag: 15.10.2015
(51) Int. Cl.: F23D 14/66, F23D 14/46, F23D 14/08, F23D 14/06, F23D 14/02, F23D 14/04

(54) **GASKOCHSTELLE UND KOCHFELD**

(30) Priorität: 21.10.2014 ES 201431552
(71) Anmelder: BSH Hausgeräte GmbH, 81739 München (DE)
(72) Erfinder: Corral Ricalde, Javier, 39600 Muriedas (ES); Ochoa Torres, Jose Salvador, 39012 Santander (ES); Pelayo Alonso, Carlos, 39638 Villafufre (Cantabria) (ES); Placer Maruri, Emilio, 39120 Liencres (ES); Rivera Peman, Julio, 50410 Cuarte de Huerva (Zaragoza) (ES); Rueda Sanudo, Cristina, 39609 Escobedo de Camargo (ES)

(57) **Zusammenfassung**

Die Erfindung betrifft eine Gaskochstelle (1) für ein Kochfeld (2), mit mehreren Gasbrennern (3), der ein Brennerunterteil (9) und ein auf dem Brennerunterteil (9) angeordnetes Brenneroberteil (10) aufweist, einer Kochmuldenwanne (6), einer Deckplatte (7) zum Abdecken der Kochmuldenwanne (6) und einer zwischen der Kochmuldenwanne (6) und der Deckplatte (7) angeordneten Zwischenwand (19), wobei das Brennerunterteil (9) zwischen der Kochmuldenwanne (6) und der Deckplatte (7) angeordnet ist und wobei eine Primärluftzufuhr zu dem Gasbrenner (3) durch einen zwischen der Zwischenwand (19) und der Deckplatte (7) angeordneten Zwischenraum (20) erfolgt.

## Beschreibung

Die vorliegende Erfindung betrifft eine Gaskochstelle für ein Kochfeld und ein Kochfeld.

Eine Gaskochstelle weist zumeist mehrere Gasbrenner auf. Die Gasbrenner weisen jeweils eine Gasdüse auf, die dazu eingerichtet ist, Brenngas in eine Mischkammer des jeweiligen Gasbrenners einzudüsen. Durch das Einströmen des Brenngases in die Mischkammer wird seitlich an der Gasdüse vorbei Primärluft in die Mischkammer eingesogen und dort mit dem Brenngas vermischt. Zur Verbesserung der Effizienz des Gasbrenners ist es bekannt, die Primärluft vorzuwärmen.

Die DE 801 226 B beschreibt einen Gasbrenner mit einem Wärmetauscher, durch den das Brenngas und die Primärluft spiralförmig in Richtung einer Mittelachse des Gasbrenners geführt werden. Hierbei nehmen die Primärluft und das Brenngas von einer Brennerflamme des Gasbrenners auf ein Brennerunterteil und damit auf den Wärmetauscher übertragene Wärme auf, wodurch es zu einer Vorwärmung des Brenngases und der Primärluft kommt.

Vor diesem Hintergrund besteht eine Aufgabe der vorliegenden Erfindung darin, eine verbesserte Gaskochstelle zur Verfügung zu stellen.

Demgemäß wird eine Gaskochstelle für ein Kochfeld mit mehreren Gasbrennern, der ein Brennerunterteil und ein auf dem Brennerunterteil angeordnetes Brenneroberteil aufweist, einer Kochmuldenwanne, einer Deckplatte zum Abdecken der Kochmuldenwanne und einer zwischen der Kochmuldenwanne und der Deckplatte angeordneten Zwischenwand vorgeschlagen. Das Brennerunterteil ist zwischen der Kochmuldenwanne und der Deckplatte angeordnet, wobei eine Primärluftzufuhr zu dem Gasbrenner durch einen zwischen der Zwischenwand und der Deckplatte angeordneten Zwischenraum erfolgt.

Dadurch, dass die Primärluftzufuhr vorzugsweise lediglich durch den zwischen der Zwischenwand unter der Deckplatte angeordneten Zwischenraum erfolgt, kann die Primärluft durch von der Deckplatte abgegebene Abwärme aufgewärmt werden. Hierdurch wird die Temperatur des Primärluft-Brenngas-Gemisches erhöht, wodurch eine verbesserte Verbrennung des Brenngases erreicht wird. Dies erhöht die Effizienz des Gasbrenners und verringert die Emission von Schadgasen. Die Temperatur der Brennerflamme wird erhöht, wodurch der Wärmeübertragungsprozess von der Brennerflamme auf ein Gargutgefäß verbessert wird. Der Energieverlust durch von dem Brennerunterteil aufgenommener Wärmeenergie wird reduziert, und ein Teil der Abwärme des Brennerunterteils wird zum Erwärmen der Primärluft genutzt. Zum Erwärmen der Primärluft ist daher keine externe Energiequelle erforderlich. Unterhalb der Kochmuldenwanne wird die Temperatur reduziert, wodurch andere Elemente der Kochstelle geringerer Hitze ausgesetzt sind. Insbesondere erfolgt die Zufuhr der Primärluft von oberhalb der Deckplatte in einen Innenraum der Kochmuldenwanne hinein.

Gemäß einer Ausführungsform ist die Zwischenwand fest mit der Kochmuldenwanne verbunden.

Die Zwischenwand kann mit der Kochmuldenwanne beispielsweise verschweißt, verlötet, verklebt, vernietet oder verschraubt sein.

Gemäß einer weiteren Ausführungsform weist die Zwischenwand eine trichterförmige Einstülpung auf, in der das Brennerunterteil anordenbar ist.

Vorzugsweise weist die Zwischenwand mehrere derartige trichterförmige Einstülpungen auf, in der Brennerunterteile mehrerer Gasbrenner anordenbar sind.

Gemäß einer weiteren Ausführungsform ist eine Stirnkante der Einstülpung mit der Kochmuldenwanne fest verbunden.

Die Stirnkante ist vorzugsweise ringförmig. Die Stirnkante kann mit der Kochmuldenwanne beispielsweise verschweißt, verschraubt, verklebt, verlötet oder vernietet sein.

Gemäß einer weiteren Ausführungsform ist eine umlaufende Außenkante der Zwischenwand mit der Kochmuldenwanne fest verbunden.

Die Zwischenwand weist vorzugsweise eine rechteckige Geometrie auf. Die Außenkante verläuft um die Zwischenwand herum. Die Außenkante der Zwischenwand kann mit der Kochmuldenwanne beispielsweise verschweißt, verlötet, verbördelt, vernietet oder verschraubt sein.

Gemäß einer weiteren Ausführungsform ist das Brennerunterteil an der Deckplatte befestigt.

Das Brennerunterteil ist vorzugsweise zweiteilig. Das Brennerunterteil kann einen Düsenaufnahmeabschnitt und einen Mischkammerabschnitt aufweisen. Der Düsenaufnahmeabschnitt und der Mischkammerabschnitt können ineinander gesteckt sein. Vorzugsweise ist der Mischkammerabschnitt mit der Deckplatte verschraubt.

Gemäß einer weiteren Ausführungsform ist der Zwischenraum so ausgebildet, dass die Primärluft beim Durchströmen desselben vorwärmbar ist.

Mit Hilfe einer Variation einer Höhe oder Dicke des Zwischenraums kann die Wärmeübertragung auf die Primärluft beeinflusst werden.

Gemäß einer weiteren Ausführungsform ist die Primärluft in dem Zwischenraum dadurch vorwärmbar, dass von der Deckplatte Wärme auf die den Zwischenraum durchströmende Primärluft übertragbar ist.

In dem Zwischenraum können weiterhin Wärmeüberträgerelemente, wie beispielsweise Wärmetauscherplatten vorgesehen sein. Hierdurch kann die Wärme besser auf die Primärluft übertragen werden.

Weiterhin wird ein Kochfeld mit einer derartigen Gaskochstelle vorgeschlagen.

Das Kochfeld ist vorzugsweise Teil eines Haushaltsgeräts.

Gemäß einer Ausführungsform weist das Kochfeld mehrere Gasbrenner, eine Kochmuldenwanne, eine Deckplatte zum Abdecken der Kochmuldenwanne und eine zwischen der Kochmuldenwanne und der Deckplatte angeordnete Zwischenwand auf.

Gemäß einer weiteren Ausführungsform ist das Kochfeld in eine Arbeitsplatte integrierbar.

Das Kochfeld kann die Arbeitsplatte umfassen. Das Kochfeld ist insbesondere in die Arbeitsplatte versenkbar. Die Deckplatte kann auf der Arbeitsplatte aufliegen. Vorzugsweise ist die Deckplatte des Kochfelds bündig mit der Arbeitsplatte angeordnet.

Gemäß einer weiteren Ausführungsform ist an einem einem Bedienfeld des Kochfelds abgewandten Randabschnitt der Deckplatte eine Primärluftzufuhrleiste zum Zuführen von Primärluft in einen zwischen der Zwischenwand und der Deckplatte vorgesehenen Zwischenraum angeordnet.

Hierzu kann an der Deckplatte eine entsprechende Öffnung vorgesehen sein, durch die die Primärluft in den Zwischenraum einströmen kann.

Weitere mögliche Implementierungen der Gaskochstelle und/oder des Kochfelds umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Gaskochstelle und/oder des Kochfelds hinzufügen.

Weitere vorteilhafte Ausgestaltungen und Aspekte der Gaskochstelle und/oder des Kochfelds sind Gegenstand der Unteransprüche sowie der im Folgenden beschriebenen Ausführungsbeispiele der Gaskochstelle und/oder des Kochfelds. Im Weiteren werden die Gaskochstelle und/oder das Kochfeld anhand von bevorzugten Ausführungsformen unter Bezugnahme auf die beigelegten Figuren näher erläutert.
Fig. 1 zeigt eine schematische Schnittansicht einer Ausführungsform einer Gaskochstelle;
Fig. 2 zeigt eine weitere schematische Schnittansicht der Gaskochstelle gemäß der Fig. 1;
Fig. 3 zeigt eine schematische Seitenansicht einer Ausführungsform einer Zwischenwand einer Kochmuldenwanne der Gaskochstelle;
Fig. 4 zeigt eine schematische Aufsicht der Zwischenwand gemäß der Fig. 3; und
Fig. 5 zeigt eine schematische perspektivische Ansicht der Zwischenwand gemäß der Fig. 3.

In den Figuren sind gleiche oder funktionsgleiche Elemente mit denselben Bezugszeichen versehen worden, sofern nichts anderes angegeben ist.

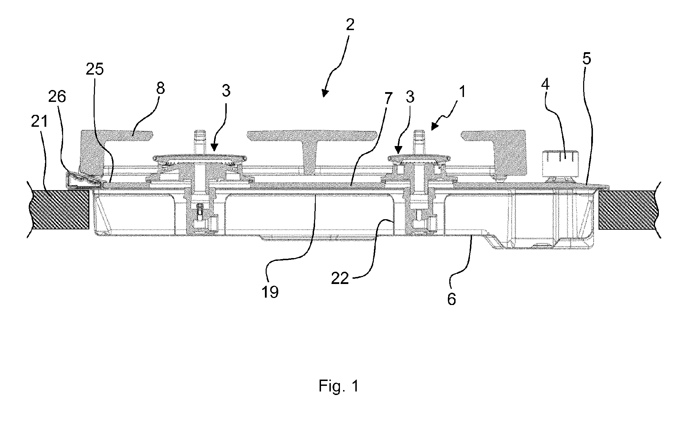

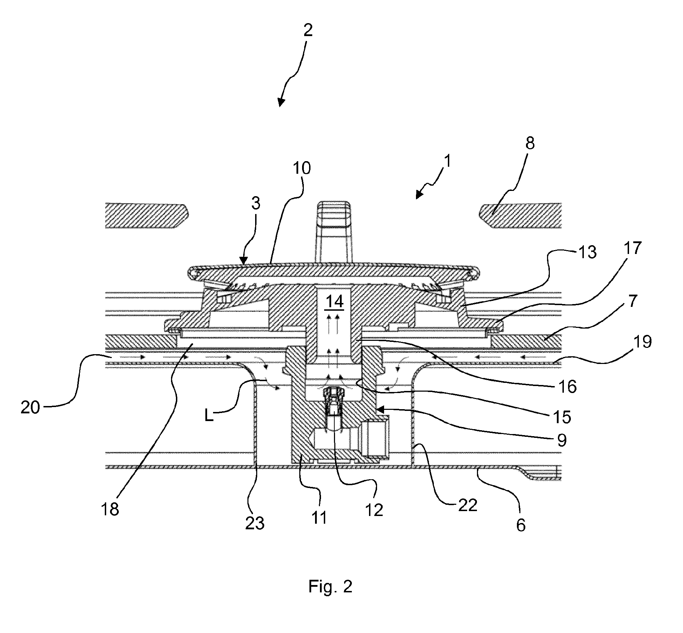

Die Fig. 1 zeigt eine schematische Schnittansicht einer Gaskochstelle 1 für ein Kochfeld 2. Die Fig. 2 zeigt eine vergrößerte Schnittansicht der Gaskochstelle 1. Im Folgenden wird auf die Fig. 1 und 2 gleichzeitig Bezug genommen.

Das Kochfeld 2 umfasst die Gaskochstelle 1. Das Kochfeld 2 kann mehrere Gaskochstellen 1 aufweisen. Die Gaskochstelle 1 kann mehrere Gasbrenner 3 aufweisen. In der Fig. 1 sind zwei Gasbrenner 3 gezeigt. Die Anzahl der Gasbrenner 3 ist beliebig. Jedem Gasbrenner 3 kann ein Gasregelventil zugeordnet sein, das mittels eines Bedienknaufs 4 betätigbar ist. Der Bedienknauf bzw. die Bedienknäufe 4 sind an einem Bedienfeld 5 des Kochfelds 2 angeordnet.

Die Gaskochstelle 1 weist neben den Gasbrennern 3 eine Kochmuldenwanne 6 und eine Deckplatte 7 zum Abdecken der Kochmuldenwanne 6 auf. Die Deckplatte 7 ist beispielsweise eine Glaskeramikplatte. Die Deckplatte 7 kann auch aus einem Stahlblech gefertigt sein. Auf der Deckplatte 7 ist ein Gargutgefäßträger bzw. ein Topfträger 8 angeordnet.

Wie die Fig. 2 zeigt, weist der Gasbrenner 3 ein Brennerunterteil 9 und ein auf dem Brennerunterteil 9 angeordnetes Brenneroberteil 10 auf. Das Brenneroberteil 10 ist auf das Brennerunterteil 9 aufgelegt. Das Brennerunterteil 9 ist vorzugsweise zweiteilig ausgeführt. Das Brennerunterteil 9 weist einen Düsenaufnahmeabschnitt 11, in dem eine Gasdüse 12 aufgenommen ist, auf. Das Brennerunterteil 9 umfasst weiterhin einen Mischkammerabschnitt 13, der ein Mischrohr oder eine Mischkammer 14 zum Mischen von Primärluft L mit Brenngas umfasst. Die Primärluft L ist in der Fig. 2 mit Hilfe von Pfeilen symbolisiert. Die Mischkammer 14 wirkt als Venturirohr. Das heißt, die Gasdüse 12 düst in die Mischkammer 14 Brenngas ein, wodurch seitlich an der Gasdüse 12 vorbei Primärluft L in die Mischkammer 14 eingesogen und dort mit dem Brenngas vermischt wird.

Der Düsenaufnahmeabschnitt 11 weist weiterhin einen Flanschaufnahmeabschnitt 15 auf, in den ein rohrförmiger Flansch 16 des Mischkammerabschnitts 13 einsteckbar ist. Der Mischkammerabschnitt 13 ist in den Düsenaufnahmeabschnitt 11 eingesteckt oder eingepresst. Das Brennerunterteil 9 und insbesondere der Düsenaufnahmeabschnitt 11 sind zwischen der Kochmuldenwanne 6 und der Deckplatte 7 angeordnet. Der Mischkammerabschnitt 13 liegt vorzugsweise mit einem umlaufenden Flansch 17 auf der Deckplatte 7 auf. Um den Gasbrenner 3 durch die Deckplatte 7 hindurchzuführen, ist in dieser ein Durchbruch 18 vorgesehen. Der Durchbruch 18 ist beispielsweise kreisrund. Das Brennerunterteil 9 und insbesondere der Mischkammerabschnitt 13 kann mit der Deckplatte 7 fest verbunden, insbesondere verschraubt sein.

Zwischen der Kochmuldenwanne 6 und der Deckplatte 7 ist eine Zwischenwand 19 angeordnet. Die Kochmuldenwanne 6 kann die Zwischenwand 19 aufweisen. Die Zwischenwand 19 ist mit der Kochmuldenwanne 6 vorzugsweise fest verbunden, insbesondere verschweißt. Zwischen der Zwischenwand 19 und der Deckplatte 7 ist ein Zwischenraum 20 vorgesehen. Die Zufuhr der Primärluft L zu dem Gasbrenner 3 und insbesondere zu dem Brennerunterteil 9 erfolgt nur durch den zwischen der Zwischenwand 19 und der Deckplatte 7 vorgesehenen Zwischenraum 20.

Dadurch, dass die Zufuhr der Primärluft L lediglich durch den Zwischenraum 20 erfolgt, kann Abwärme von der durch den Gasbrenner 3 erwärmten Deckplatte 7 auf die Primärluft L übertragen werden. Hierdurch wird die Temperatur der Primärluft L erhöht. Insbesondere wird hierbei auch die Temperatur des Primärluft-Brenngas-Gemisches in der Mischkammer 14 erhöht, wodurch sich eine verbesserte Verbrennung ergibt. Hierdurch erhöht sich die Effizienz des Gasbrenners 3 und die Emission von Schadgasen wird reduziert. Die Temperatur der Brennerflamme wird erhöht, wodurch sich der Wärmeübertragungsvorgang auf ein Gargutgefäß verbessert. Der Energieverlust durch das erwärmte Brennerunterteil 9 wird reduziert, da auch das Brennerunterteil 9 Abwärme an die Primärluft L abgibt. Externe Wärmeenergie zum Vorheizen der Primärluft L ist verzichtbar. Weiterhin wird die Temperatur unter der Kochmuldenwanne 6 reduziert, wodurch andere Bauteile der Kochstelle vor einer zu hohen Erwärmung geschützt werden.

Wie die Fig. 1 zeigt, kann das Kochfeld 2 in eine Arbeitsplatte 21 eingelassen sein. Das Kochfeld 2 kann die Arbeitsplatte 21 aufweisen. Die Deckplatte 7 kann auf der Arbeitsplatte 21 aufliegen. Insbesondere ist die Gaskochstelle 1 in die Arbeitsplatte 21 eingelassen. Die Deckplatte 7 kann auch bündig mit der Arbeitsplatte 21 ausgerichtet sein.

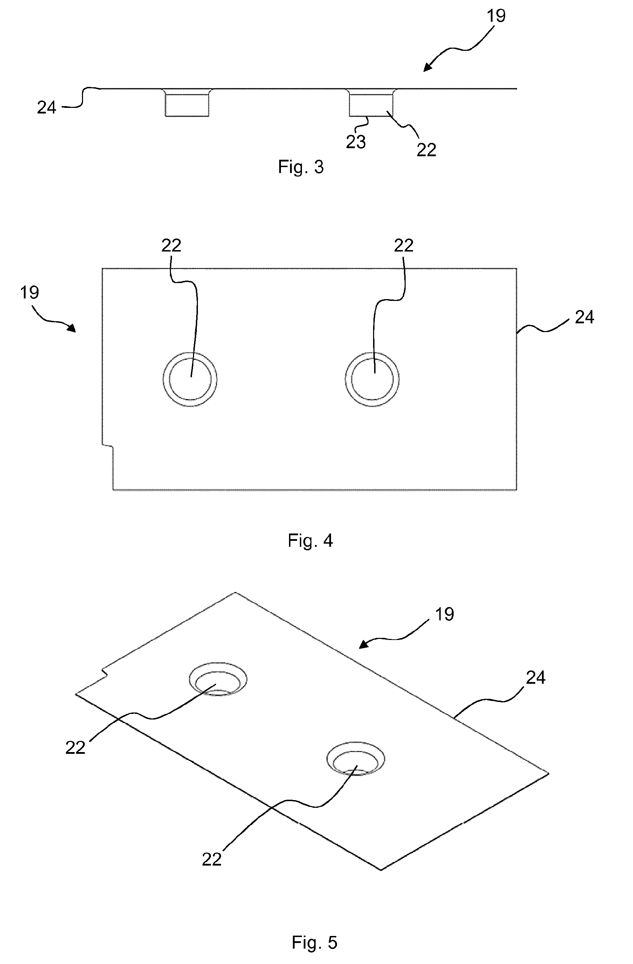

Wie die Fig. 1 bis 5 zeigen, weist die Zwischenwand 19 zumindest eine trichterförmige Einstülpung 22 auf, in der das Brennerunterteil 9 anordenbar ist. Eine Stirnkante 23 der Einstülpung 22 ist fest mit der Kochmuldenwanne 6 verbunden. Beispielsweise ist die Stirnkante 23 mit der Kochmuldenwanne 6 verschweißt, verlötet, verklebt, verschraubt oder vernietet. Weiterhin kann auch eine umlaufende Außenkante 24 (Fig. 3 bis 5) der Zwischenwand 19 fest mit der Kochmuldenwanne 6 verbunden sein. Beispielsweise sind die Außenkante 24 und die Kochmuldenwanne 6 miteinander verbördelt oder sonst fest verbunden.

Das Brenngas strömt aus der Gasdüse 12 in die Mischkammer 14 ein. Hierdurch wird, wie in der Fig. 2 mit Hilfe von Pfeilen symbolisiert, die Primärluft L durch den Zwischenraum 20 in Richtung des Brennerunterteils 9 gesogen. Dabei strömt die Primärluft L auch über das Brennerunterteil 9, das, wie die Deckplatte 7, Wärme an die Primärluft L abgibt. In der Mischkammer 14 mischen sich das Brenngas und die erwärmte Primärluft L. Von der Mischkammer 14 wird das Brenngas-Primärluft-Gemisch in das Brenneroberteil 10 geleitet wo es durch Gasverteilungsdüsen aus dem Brenneroberteil 10 austritt und verbrennt.

Wie die Fig. 1 zeigt, kann an einem dem Bedienfeld 5 des Kochfeldes 2 abgewandten Randabschnitt 25 der Deckplatte 7 eine Primärluftzufuhrleiste 26 zum Zuführen der Primärluft L in den Zwischenraum 20 vorgesehen sein. Hierzu kann eine entsprechende Öffnung in der Deckplatte 7 vorgesehen sein.

### Verwendete Bezugszeichen:

- 1: Gaskochstelle
- 2: Kochfeld
- 3: Gasbrenner
- 4: Bedienknauf
- 5: Bedienfeld
- 6: Kochmuldenwanne
- 7: Deckplatte
- 8: Gargutgefäßträger
- 9: Brennerunterteil
- 10: Brenneroberteil
- 11: Düsenaufnahmeabschnitt
- 12: Gasdüse
- 13: Mischkammerabschnitt
- 14: Mischkammer
- 15: Flanschaufnahmeabschnitt
- 16: Flansch
- 17: Flansch
- 18: Durchbruch
- 19: Zwischenwand
- 20: Zwischenraum
- 21: Arbeitsplatte
- 22: Einstülpung
- 23: Stirnkante
- 24: Außenkante
- 25: Randabschnitt
- 26: Primärluftzufuhrleiste

- L: Primärluft

## Patentansprüche

1. Gaskochstelle (1) für ein Kochfeld (2), mit einem oder mehreren Gasbrennern (3), der ein Brennerunterteil (9) und ein auf dem Brennerunterteil (9) angeordnetes Brenneroberteil (10) aufweist, einer Kochmuldenwanne (6), einer Deckplatte (7) zum Abdecken der Kochmuldenwanne (6) und einer zwischen der Kochmuldenwanne (6) und der Deckplatte (7) angeordneten Zwischenwand (19), wobei das Brennerunterteil (9) zwischen der Kochmuldenwanne (6) und der Deckplatte (7) angeordnet ist und wobei eine Primärluftzufuhr zu dem Gasbrenner (3) durch einen zwischen der Zwischenwand (19) und der Deckplatte (7) angeordneten Zwischenraum (20) erfolgt.

2. Gaskochstelle nach Anspruch 1, **dadurch gekennzeichnet, dass** die Zwischenwand (19) fest mit der Kochmuldenwanne (6) verbunden ist.

3. Gaskochstelle nach Anspruch 1 oder 2, **dadurch gekennzeichnet, dass** die Zwischenwand (19) eine trichterförmige Einstülpung (22) aufweist, in der das Brennerunterteil (9) anordenbar ist.

4. Gaskochstelle nach Anspruch 3, **dadurch gekennzeichnet, dass** eine Stirnkante (23) der Einstülpung (22) mit der Kochmuldenwanne (6) fest verbunden ist.

5. Gaskochstelle nach einem der Ansprüche 1 - 4, **dadurch gekennzeichnet, dass** eine umlaufende Außenkante (24) der Zwischenwand (19) mit der Kochmuldenwanne (6) fest verbunden ist.

6. Gaskochstelle nach einem der Ansprüche 1 - 5, **dadurch gekennzeichnet, dass** das Brennerunterteil (9) an der Deckplatte (7) befestigt ist.

7. Gaskochstelle nach einem der Ansprüche 1 - 6, **dadurch gekennzeichnet, dass** der Zwischenraum (20) so ausgebildet ist, dass die Primärluft (L) beim Durchströmen desselben vorwärmbar ist.

8. Gaskochstelle nach Anspruch 7, **dadurch gekennzeichnet, dass** die Primärluft (L) in dem Zwischenraum (20) dadurch vorwärmbar ist, dass von der Deckplatte (7) Wärme auf die den Zwischenraum (20) durchströmende Primärluft (L) übertragbar ist.

9. Kochfeld (2) mit einer Gaskochstelle (1) nach einem der Ansprüche 1 - 8.

10. Kochfeld nach Anspruch 9, **gekennzeichnet durch** mehrere Gasbrenner (3), eine Kochmuldenwanne (6), eine Deckplatte (7) zum Abdecken der Kochmuldenwanne (6) und einer zwischen der Kochmuldenwanne (6) und der Deckplatte (7) angeordneten Zwischenwand (19).

11. Kochfeld nach Anspruch 9 oder 10, **dadurch gekennzeichnet, dass** das Kochfeld (2) in eine Arbeitsplatte (21) integrierbar ist.

12. Kochfeld nach einem der Ansprüche 9 - 11, **dadurch gekennzeichnet, dass** an einem einem Bedienfeld (5) des Kochfelds (2) abgewandten Randabschnitt (25) der Deckplatte (7) eine Primärluftzufuhrleiste (26) zum Zuführen von Primärluft (L) in einen zwischen der Zwischenwand (19) und der Deckplatte (7) vorgesehenen Zwischenraum (20) angeordnet ist.
